# EUROPÄISCHE PATENTSCHRIFT

(11) **EP 0 768 684 B1**
(45) Veröffentlichungstag und Bekanntmachung des Hinweises auf die Patenterteilung: **07.06.2000**
(21) Anmeldenummer: 96120141.5
(22) Anmeldetag: 05.02.1994
(51) Int. Cl.: H01F 38/30

(54) **Ringkernstromwandler zum Einbau in eine metallgekapselte Hochspannungsschaltanlage**
Current transformer with annular core to be built in a metal cast high-tension switchgear installation
Transformateur de courant à noyau annulaire destiné à être monté dans une installation de commutation à haute tension encapsulée en métal

(43) Veröffentlichungstag der Anmeldung: 16.04.1997
(62) Teilanmeldung aus: 94101764.2
(73) Patentinhaber: ALSTOM AG, 5036 Oberentfelden (CH)
(72) Erfinder: Lacher, Walter, 5004 Aarau (CH)
(74) Vertreter: Morva, Tibor

(56) Entgegenhaltungen:
- EP-A- 0 063 636
- US-A- 3 701 003

## Beschreibung

Die Erfindung betrifft einen Ringkernstromwandler zum Einbau in eine metallgekapselte Hochspannungsschaltanlage mit einer aus einer äusseren Kapselung und aus einer ein inneres Rohr tragenden Kapselung zusammengesetzte Kapselung mit mindestens einem mit Sekundärwicklung versehenen innerhalb der zusammengesetzten Kapselung angeordneten Ringkern und mit einem in der Oeffnung des Ringkernes verlaufenden Primärleiter, wobei das zwischen dem Ringkern und dem Primärleiter liegende innere Rohr am einen Ende mit der Kapselung elektrisch leitend verbunden und an den übrigen Stellen davon elektrisch isoliert ist.

Aus der EP-B1-0063636 ist ein Ringkernstromwandler der eingangs erwähnten Art bekannt. Durch einen zwischen dem Endbereich des inneren Rohres und dem diesem Endbereich gegenüberliegenden Teil der Kapselung liegenden elektrisch isolierenden Spalt wird verhindert, dass die Kapselung zusammen mit dem inneren Rohr eine die Stromwandlermessung verfälschende Kurzschlusswindung bildet. Bei dieser Anordnung ist ein an der der elektrischen Verbindungsstelle zwischen der Kapselung und dem inneren Rohr abgekehrten Seite des Ringkernes mit der Kapselung elektrisch leitend verbundener und an den übrigen Stellen davon elektrisch isolierter, das innere Rohr teilweise überlappender, elektrisch leitender, zylindrischer Abschirmkörper vorhanden. Der Ueberlappungsteil des Abschirmkörpers einschliesslich der zwischen ihm und dem inneren Rohr liegenden Isolation bildet mit der zwischen diesen Teilen vorhandenen Kapazität einen Kondensator. Dieser Kondensator soll verhindern, dass einerseits eine im Primärleiter geführte steile Wanderwelle in der Sekundärwicklung des Stromwandlers eine hohe Ueberspannung induziert und dass anderseits das Potential der Sekundärwicklung durch kapazitive Koppelung mit der Kapselung erhöht wird. Je nach Laufrichtung der Wanderwelle würde ausserdem am freien Ende des inneren Rohres ohne Abschirmkörper eine Reflexion entstehen, weil die Länge dieses inneren Rohres meistens in der Grössenordnung der Frontlänge der Wanderwelle liegt. Diese reflektierte Welle wäre mit der Stromwandlerwicklung kapazitiv gekoppelt und würde ohne den hier vorgesehenen Kondensator auch zur Potentialerhöhung der Sekundärwicklung beitragen. Die vorerwähnten steilen Wanderwellen können in einer metallgekapselten Hochspannungsschaltanlage auftreten, wenn ein eine kleine Kapazität darstellender Anlagenteil zugeschaltet wird, oder wenn sich beim Ausschalten eines kleinen kapazitiven Stromes Rück- oder Wiederzündungen ergeben. Die steile Wanderwelle breitet sich vom Entstehungsort des Schaltlichtbogens beidseitig mit Frontzeiten zwischen 2 und 300 ns aus. Bei dieser bekannten Anordnung hat man aber festgestellt, dass die Kapazität des die Trennstelle der Kapselung unter dem Ringkern überbrückenden Kondensators mit der Induktivität des den Ringkern umgebenden Teiles des Gehäuses ein schwingfähiges Gebilde mit einer schwachen Dämpfung bildet. Diese resonanzfähige Anordnung kann bei durch steile Wanderwellen angeregten Resonanzschwingungen zu verhältnismässig hohen Ueberspannungen führen. Ausserdem ist die Montage dieser Anordnung wegen den engen Toleranzen mit Schwierigkeiten verbunden Ein allfälliges Nichtanliegen der zwischen dem Endbereich des inneren Rohres und dem diesem Endbereich gegenüberliegenden Teil der Kapselung angebrachten elektrischen Isolation an den elektrisch leitenden Begrenzugsschichten würde bei elektrischen Beanspruchungen zu unerwünschten Teilentladungen führen.

Aus der US-A-3701003 ist ein weiterer Ringkernstromwandler bekannt. Bei diesem Ringkernstromwandler ist der mit einer Sekundärwicklung bewickelte Ringkern mit einer Metallkapselung umgeben. Um zu verhindern, dass die Metallkapselung eine Kurzschlusswindung bildet, ist die Metallkapselung mit einem elektrisch isolierten Spalt versehen. Zur Dämpfung hochfrequenter, durch steile Wanderwellen eingeleiteter Schwingungen ist der Spalt mit mehreren ohm'schen Widerständen in induktivitätsarmer Anordnung überbrückt. Bei dieser Anordnung müssen die ohm'schen Widerstände innerhalb der Metallkapselung unverschiebbar befestigt werden. Diese konstruktive Lösung ist bei einer ausreichenden Stabilität der Ringkernstromwandleranordnung kompliziert und daher mit wirtschaftlichen Nachteilen behaftet.

Die Aufgabe der vorliegenden Erfindung ist es, einen Ringkernstromwandler der eingangs erwähnten Art zu entwickeln, bei welchem die Sekundärwicklung des Stromwandlers gegen durch steile Wanderwellen verursachte Ueberspannungen mit einfachen Mitteln geschützt ist und bei welchem diese Mittel auch zur Stabilität der Ringkernstromwandleranordnung beitragen.

Die gestellte Aufgabe ist dadurch gelöst, dass der der elektrischen Verbindungsstelle zwischen der Kapselung und dem inneren Rohr abgekehrte Endbereich des inneren Rohres und der von diesem Endbereich durch einen elektrisch isolierenden Spalt getrennte Teil der Kapselung durch mindestens einen aus einem in den Spalt eingelegten elastischen Halbleitermaterial bestehenden ohm'schen Widerstand überbrückt ist. Das Halbleitermaterial setzt man in eine Ringnut der Kapselung ein, wobei es dort gleichzeitig zur Zentrierung des Endbereiches des inneren Rohres und somit zur Stabilität der Ringkernstromwandleranordnung beiträgt. Eine besondere, mit Aufwand verbundene Befestigung der ohm'schen Widerstände ist dabei nicht erforderlich.

Der ohm'sche Widerstand kann dabei aus mehreren, am Umfang gleichmässig verteilten Teilwiderständen zusammengesetzt sein. Um den Durchgang steiler Wanderwellen durch den ohm'schen Widerstand zu begünstigen, ist es wesentlich, dass der ohm'sche Widerstand induktivitätsarm ist, was durch die gleichmässige Verteilung der Teilwiderstände am Umfang des Spaltes erreichbar ist.

Im folgenden werden anhand der beiliegenden Zeichnungen Ausführungsbeispiele der Erfindung näher beschrieben. Es zeigen:
- Fig.1: einen in einer Kapselung untergebrachten Ringkernstromwandler im Schnitt,
- Fig.2: einen vergrösserten Ausschnitt aus Fig.1 mit dem Bereich eines zwischen einem inneren Rohrende und der Kapselung liegenden Spalt.

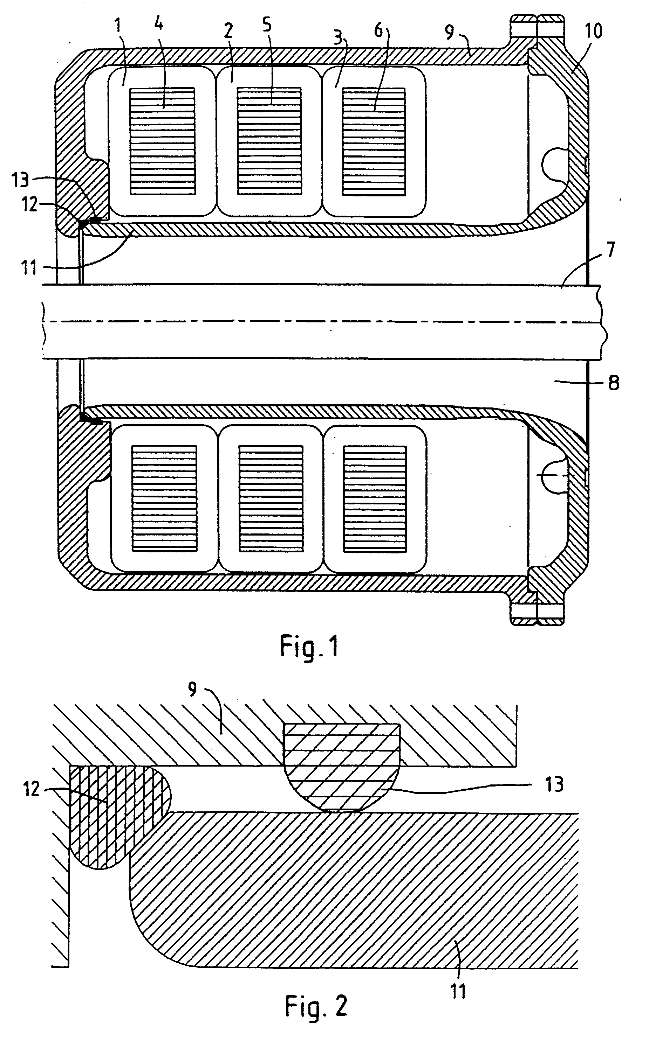

In Fig.1 ist ein Ringkernstromwandler mit drei mit Sekundärwicklungen 1, 2, 3 versehenen Ringkernen 4, 5, 6 im Schnitt dargestellt. In der Oeffnung der Ringkerne 4, 5, 6 verläuft ein für die Führung des Betriebsstromes bestimmter Primärleiter 7. Der Ringkernstromwandler ist zum Einbau in eine metallgekapselte Hochspannungsschaltanlage vorgesehen. Der Primärleiter 7 ist in einem mit einem Isoliergas, z.B. SF₆ gefüllten, dicht abgeschlossenen Druckgasraum 8 geführt. Die Ringkerne 4, 5, 6 sind in einem mit der übrigen, nicht dargestellten Metallkapselung der Hochspannungsschaltanlage elektrisch leitend verbundenen äusseren Kapselung 9 aus Metall untergebracht. Diese äussere Kapselung 9 ist an einer ebenfalls mit der Metallkapselung der Hochspannungsschaltanlage elektrisch leitend verbundenen Kapselung 10 angeschlossen. Die Kapselung 10 trägt innen ein mit ihr elektrisch leitend verbundenes in die Oeffnung der Ringkerne 4, 5, 6 hineinragendes inneres Rohr 11. Das innere Rohr 11 ist nur an seinem einen Ende mit der Kapselung 10 elektrisch leitend verbunden, an den übrigen Stellen ist es davon und von den übrigen Kapselungsteilen elektrisch isoliert. Mit seinem der elektrischen Verbindungsstelle zwischen dem inneren Rohr 11 und der Kapselung 10 abgekehrten Ende liegt das innere Rohr 11 an einem in der äusseren Kapselung 9 eingelegten Dichtungsring 12 gasdicht an. Der die Ringkerne 4, 5, 6 aufnehmende Innenraum der äusseren Kapselung 9 ist mit Luft gefüllt.

Der zwischen dem der elektrischen Verbindungsstelle zwischen der Kapselung 10 und dem inneren Rohr 11 abgekehrten Endbereich des inneren Rohres 11 und der äusseren Kapselung 9 vorhandene elektrisch isolierende Spalt verhindert, dass die äussere Kapselung 9 zusammen mit der daran anschliessenden Kapselung 10 und dem inneren Rohr 11 eine die Stromwandlermessung verfälschende Kurzschlusswindung bildet. Dieser Spalt ist durch einen aus einem elastischen Halbleitermaterial 13, z.B. aus halbleitfähigem Kunststoff bestehenden ohm'schen Widerstand überbrückt. Der ohm'sche Widerstand ist aus mehreren am Umfang des Spaltes gleichmässig verteilten, untereinander gleich ausgebildeten, kreisringstückförmigen Teilwiderständen zusammengesetzt, die in eine Nut der äusseren Kapselung 9 eingelegt sind. Auf diese Weise ist der ohm'sche Widerstand induktivitätsarm. Das elastische Halbleitermaterial 13 des ohm'schen Widerstandes trägt zur Zentrierung des inneren Rohres 11 in der äusseren Kapselung auch bei.

Der den in der Oeffnung der Ringkerne 4, 5, 6 liegenden Spalt überbrückende ohm'sche Widerstand bedeutet bei betriebsfrequenten Strömen eine verhältnismässig kleine Belastung des Stromwandlers. Die Summe der Windungsspannungen der drei Ringkerne 4, 5, 6 treibt einen kleinen, bei der Bestimmung der Messgenauigkeit des Stromwandlers zu berücksichtigenden Strom durch den den Spalt überbrückenden ohm'schen Widerstand. Sollte eine steile Wanderwelle die Stromwandleranordnung durchqueren, so wird die Impedanz für diese steile Wanderwelle über den den Spalt überbrückenden ohm'schen Widerstand kleiner als über die mit einer Induktivität behaftete äussere Kapselung 9. Somit wird eine steile Wanderwelle bei dieser Anordnung praktisch vollständig in der Oeffnung der Ringkerne 4, 5, 6 hin- und zurückgeführt, so dass in der Sekundärwicklungen 1, 2, 3 praktisch keine Ueberspannungen induziert werden. Eine Potentialerhöhung der Sekundärwicklungen 1, 2, 3 über die kapazitive Koppelung mit der äusseren Kapselung bleibt bei dieser Anordnung auch in tragbarem Rahmen. Dadurch, dass der den Spalt überbrückende ohm'sche Widerstand eine Reflexion der in Richtung des freien Endes des inneren Rohres 11 laufenden steilen Wanderwellen am freien Ende des inneren Rohres 11 unterbindet, fällt eine durch Reflexion bedingte Potentialerhöhung der mit dem inneren Rohr 11 kapazitiv gekoppelten Sekundärwicklungen 1, 2, 3 auch in einen vernachlässigbaren Bereich.

## Patentansprüche

1. Ringkernstromwandler zum Einbau in eine metallgekapselte Hochspannungsschaltanlage mit einer aus einer äusseren Kapselung (9) und aus einer ein inneres Rohr (11) tragenden Kapselung (10) zusammengestzten Kapselung (9, 10), mit mindestens einem mit Sekundärwicklung (1, 2, 3) versehenen innerhalb der zusammengesetzten Kapselung (9, 10) angeordneten Ringkern (4, 5, 6) und mit einem in der Oeffnung des Ringkernes (4, 5, 6) verlaufenden Primärleiter (7), wobei das zwischen dem Ringkern (4, 5, 6) und dem Primärleiter (7) liegende innere Rohr (11) am einen Ende mit der Kapselung (10) elektrisch leitend verbunden und an den übrigen Stellen davon elektrisch isoliert ist, **dadurch gekennzeichnet, dass** der der elektrischen Verbindungsstelle zwischen der Kapselung (10) und dem inneren Rohr (11) abgekehrte Endbereich des inneren Rohres (11) und der von diesem Endbereich durch einen elektrisch isolierenden Spalt getrennte Teil der Kapselung (9) durch mindestens einen aus einem in den Spalt eingelegten elastischen Halbleitermaterial (13) bestehenden ohm'schen Widerstand überbrückt ist.

2. Ringkernstromwandler nach Anspruch 1, **dadurch gekennzeichnet, dass** der ohm'sche Widerstand aus mehreren, am Umfang gleichmässig verteilten Teilwiderständen (13) zusammengesetzt ist.

## Claims

1. A toroidal-core transformer for incorporation into metal-enclosed high-voltage electrical gear, the transformer comprising an enclosure (9, 10) assembled from an outer enclosure member (9) and an enclosure member (10) carrying an inner duct (11), at least one toroidal core (4, 5, 6) provided with a respective secondary winding (1, 2, 3) received within the assembled enclosure (9, 10), and a primary conductor (7) running through the opening in the toroidal core (4, 5, 6) with the inner duct (11) lying between the toroidal core (4, 5, 6) and the primary conductor (7), one end of the duct being electrically connected with the enclosure while other points of the duct are electrically insulated from the enclosure, the transformer being characterized in that the end region of the inner duct (11) remote from its electrical connection with the enclosure member (10) carrying it is separated from the outer enclosure member (9) by an electrically insulating gap that is bridged by at least one ohmic resistance consisting of an elastic semiconductive material (13) placed in the gap.

2. A toroidal-core transformer according to claim 1, characterized in that the ohmic resistance is made up of a plurality of part resistances (13) evenly distributed around the periphery.

## Revendications

1. Transformateur toroïdal destiné à être encastré dans un appareil distributeur haute tension comportant un blindage (9, 10) constitué d'un blindage extérieur (9) et d'un blindage (10) portant un tuyau intérieur (11), comportant au moins un tore magnétique (4, 5, 6) disposé à l'intérieur du blindage composé (9, 10) et muni d'un enroulement secondaire (1, 2, 3) et comportant un conducteur primaire (7) s'étendant dans l'ouverture du tore magnétique (4, 5, 6), le tuyau intérieur (11) se trouvant entre le tore magnétique (4, 5, 6) et le conducteur primaire (7) est relié à une extrémité avec le blindage (10) de manière électriquement conductrice et en est isolé électriquement aux autres endroits, caractérisé en ce que la zone terminale du tube intérieur (11) qui est opposée au raccord électrique entre le blindage (10) et le tube intérieur (11) et la partie du blindage (9) qui est séparée de cette zone terminale par un interstice électriquement isolé est pontée par une résistance ohmique constituée d'au moins un matériau semi-conducteur (13) élastique, inséré dans l'interstice.

2. Transformateur toroïdal selon la revendication 1, caractérisé en ce que la résistance ohmique est composée de plusieurs résistances partielles (13) réparties régulièrement sur le pourtour.
